# EUROPÄISCHE PATENTSCHRIFT

(11) **EP 1 882 550 B1**
(45) Veröffentlichungstag und Bekanntmachung des Hinweises auf die Patenterteilung: **21.01.2009**
(21) Anmeldenummer: 07014396.1
(22) Anmeldetag: 23.07.2007
(51) Int. Cl.: B24B 27/00, B23Q 3/155

(54) **Vorrichtung zur Finish-Bearbeitung von Werkstücken**
Device for processing the finish of workpieces
Dispositif destiné au traitement par fini de pièces à usiner

(30) Priorität: 27.07.2006 DE 102006035539
(43) Veröffentlichungstag der Anmeldung: 30.01.2008
(73) Patentinhaber: Thielenhaus Technologies GmbH, 42285 Wuppertal (DE)
(72) Erfinder: Steinwender, Holger, 42289 Wuppertal (DE)
(74) Vertreter: Albrecht, Rainer Harald

(56) Entgegenhaltungen:
- DE-U- 7 130 762

## Beschreibung

Die Erfindung betrifft eine Vorrichtung zur Finish-Bearbeitung von Werkstücken. Durch die Finish-Bearbeitung werden Maßabweichungen und Unrundheiten eines Werkstückes beseitigt. Gleichzeitig kann eine Werkstückoberfläche erzeugt werden, die sich durch eine hohe Oberflächengüte auszeichnet. Unter den Begriff "Finish-Bearbeitung" fallen insbesondere die Verfahren Feinschleifen und Honen, wobei als Finish-Werkzeuge beispielsweise Schleifbänder, Honsteine, rotierende Topfscheiben und dergleichen eingesetzt werden können.

Aus der Praxis sind Vorrichtungen zur Finish-Bearbeitung bekannt, die bei einem Einsatz in einer Serienfertigung die automatische sequentielle Bearbeitung einer Vielzahl von Werkstücken ermöglichen, wobei die Bearbeitung eines Werkstückes nacheinander an unterschiedlichen Bearbeitungsstationen durchgeführt werden kann. So ist beispielsweise bekannt, ein Werkstück automatisch einer Vorrichtung zur Finish-Bearbeitung zuzuführen, in mehreren Arbeitsschritten zunächst eine grobe und nachfolgend eine feine Finish-Bearbeitung durchzuführen, bevor das Werkstück automatisiert der Vorrichtung entnommen wird. Geeignete Vorrichtungen können beispielsweise als Rundtisch oder Linearanordnung mit mehreren Arbeitsstationen ausgeführt sein, wobei während der Finish-Bearbeitung vorzugsweise nicht nur ein Werkzeug sondern zusätzlich auch das Werkstück bewegt werden.

Aus DE 71 30 762 U, auf der der Oberbegriff des Anspruchs 1 basiert, ist eine Bohrmaschine mit einem Magazin für mehrere Spindeln sowie einer Werkzeugwechselvorrichtung bekannt. Durch Bewegung des Magazins quer zur Spindelachse werden die Spindeln in eine Arbeitsstellung bewegt, dann gespannt, ausgerichtet und mit einer axialen Spannbewegung an eine motorgetriebene Antriebswelle gekuppelt. Mit der Vorrichtung ist es nicht möglich, die in dem Magazin bevorrateten Spindeln an zwei oder mehr Antriebe anzuschließen oder mehrere Spindeln aus diesem Magazin gleichzeitig anzutreiben. Die Vorrichtung zum Ausrichten und Spannen der Spindeln ist konstruktiv aufwendig. Den Anforderungen, die an eine Vorrichtung zur Finishbearbeitung von Werkstücken gestellt werden, wird die bekannte Vorrichtung nicht gerecht.

Der Erfindung liegt die Aufgabe zugrunde, eine Vorrichtung zur Finish-Bearbeitung von Werkstücken anzugeben, die einfach aufgebaut ist und dabei eine vielseitige Bearbeitung von Werkstücken ermöglicht.

Gegenstand der Erfindung und Lösung der Aufgabe ist eine Vorrichtung zur Finish-Bearbeitung von Werkstücken mit mindestens einer motorgetriebenen Antriebswelle, die um eine ortsfeste Längsachse drehbar gelagert ist, und mit zumindest einer an die Antriebswelle kuppelbaren Abtriebswelle, wobei die Abtriebswelle ein Anschlussende aufweist, welches einem Anschlussende der Antriebswelle zugeordnet ist, wobei die Abtriebswelle entlang einer als ortsfeste Führung ausgebildeten Bahn senkrecht zur Längsachse der Antriebswelle positionierbar sind, wobei eines der Anschlussenden als Schlitz und das zugeordnete Anschlussende als in den Schlitz durch eine Bewegung der Abtriebswelle entlang der vorgegebenen Bahn seitlich einschiebbarer Endabschnitt ausgebildet ist, und wobei bei einer Anordnung der Antriebswelle und der Abtriebswelle, bei der die zugeordneten Anschlussenden in Eingriff stehen, die Anschlussenden eine Kupplung zur Übertragung von Drehbewegungen bilden. Bei der Abtriebswelle handelt es sich insbesondere um eine Spindel.

Bei der erfindungsgemäßen Vorrichtung können beispielsweise nacheinander zumindest zwei Abtriebswellen bzw. Spindeln an eine ortsfest gelagerte Antriebswelle gekuppelt und von dieser angetrieben werden. Die Antriebswelle, die um eine ortsfeste Längsachse drehbar gelagert ist, kann auf einfache Weise direkt oder über ein Getriebe mit einem Motor verbunden sein. Ein Antrieb der Abtriebswellen durch die Antriebswelle ist nur vorgesehen, wenn die zugeordneten Anschlussenden in Eingriff stehen. Ein separater Antrieb für jede der Abtriebswellen oder auch ein Getriebe zur Verteilung der Drehung der Antriebswelle auf mehrere Abtriebswellen ist nicht erforderlich, weshalb die Vorrichtung zur Finish-Bearbeitung einfach und damit kostengünstig ausgeführt sein kann. Des Weiteren kann die Abtriebswelle/Spindel beispielsweise entlang der vorgegebenen Bahn zwischen einer Bearbeitungs- und einer Beladeposition hin- und herbewegt wird, wobei das Anschlussende der Abtriebswelle in der Bearbeitungsposition mit dem Anschlussende der Antriebswelle in Eingriff steht. Im Rahmen der Erfindung besteht auch die Möglichkeit, dass die erfindungsgemäße Vorrichtung mehrere Antriebswellen aufweist, die jeweils um eine ortsfeste Längsachse drehbar gelagert sind. Auch bei einer solchen Ausgestaltung zeichnet sich die Vorrichtung durch einen einfachen mechanischen Aufbau aus, wobei jede Abtriebswelle/Spindel nacheinander an die verschiedenen Antriebswellen kuppelbar ist oder zwischen einer Bearbeitungs- und einer Beladeposition hin- und herbewegt werden kann und in der Bearbeitungsposition mit einer der Antriebswellen verbunden ist. Mit der erfindungsgemäßen Vorrichtung ist es möglich, eine Mehrzahl von Spindeln, die jeweils an einen der Antriebswellen angekuppelt sind, gleichzeitig anzutreiben, wobei die angetriebenen Spindeln mit der gleichen Präzision laufen. Die Antriebswellen können beispielsweise angepasst an unterschiedliche Bearbeitungsschritte im eingekuppelten Zustand unterschiedlich angetrieben werden.

Die erfindungsgemäß ausgebildete Kupplung arbeitet mit passiven Kupplungselementen und weist keine verstellbaren Spann- oder Zentriereinrichtungen auf. Ein Ausrichten oder Zentrieren der Spindeln in Bezug auf die Abtriebswelle ist nicht notwendig, da zwischen den zusammenwirkenden Kupplungselementen ein ausreichendes Spiel vorhanden ist und die Kupplung dadurch eine gewisse Flexibilität aufweist.

Die Längsachse der Antriebswelle und die Längsachse der zumindest einen Abtriebswelle sind vorzugsweise parallel ausgerichtet, wobei bei einer koaxialen Anordnung der Antriebswelle mit der Abtriebswelle bzw. mit einer von mehreren Abtriebswellen die zugeordneten Anschlussenden in Eingriff stehen und eine Kupplung zur Übertragung von Drehbewegungen bilden.

Die erfindungsgemäße Vorrichtung weist eine ortsfeste Führung auf, an der die Abtriebswelle im ausgekuppelten Zustand geführt ist. Die ortsfeste Führung hält die Abtriebswelle genau auf einer vorgegebenen Bahn, wobei die Abtriebswellen vorzugsweise an ihrem Anschlussende geführt sind. Durch die Führung wird die Abtriebswelle derart geleitet, dass bei einem Ankuppeln an die Antriebswelle der Endabschnitt eines der Anschlussenden mit geringem Spiel und ohne zu klemmen seitlich in den Schlitz des anderen zugeordneten Anschlussendes eingeschoben werden kann. Um den Endabschnitt und den Schlitz im gekuppelten Zustand gegen ein unbeabsichtigtes Verrutschen zu sichern, kann ein automatisch einrastender oder separat betätigbarer Klemmmechanismus vorgesehen sein.

Der Endabschnitt kann in einer besonders leicht realisierbaren Ausgestaltung der erfindungsgemäßen Vorrichtung als Steg ausgebildet sein, der entsprechend dem Schlitz geformt und in diesen mit geringem Spiel einschiebbar ist. Anstelle des Stegs können auch zumindest zwei entlang der vorgegebenen Bahn hintereinander angeordnete Vorsprünge als Endabschnitt vorgesehen sein. Im Rahmen der Erfindung kann der Endabschnitt auch aus zumindest zwei Rollen gebildet sein, wobei eine solche Ausgestaltung insbesondere in Verbindung mit einer ortsfesten Führung, auf der die Rollen geführt sind, vorteilhaft ist. In einer weiteren, bevorzugten Ausgestaltung der Erfindung ist vorgesehen, dass der Endabschnitt zwei Rollen und einen zwischen den Rollen angeordneten Zwischenabschnitt aufweist, der beim Einschieben des Endabschnittes in den Schlitz die dem Schlitz zugeordnete Antriebswelle oder Abtriebswelle gegen ein Verdrehen sichert.

Die Abtriebswelle kann im Rahmen der Erfindung ohne Einschränkung senkrecht zu ihrer Längsachse entlang einer Geraden, eines Kreisbogens oder einer beliebigen Kurve verschiebbar angeordnet sein, wobei der Schlitz entsprechend dem Verlauf der vorgegebenen Bahn geformt sein muss, um den Eingriff der einander zugeordneten Anschlussenden zu ermöglichen.

In einer bevorzugten Ausgestaltung der erfindungsgemäßen Vorrichtung zur Finish-Bearbeitung von Werkstücken ist vorgesehen, dass die Vorrichtung zumindest ein Führungselement aufweist, welches mit der Abtriebswelle gemeinsam verschiebbar ist und die Antriebswelle im ausgekuppelten Zustand gegen ein Verdrehen sichert. Das Führungselement kann dabei zwischen zwei Antriebswellen in dem Bereich von Schlitz und Endabschnitt oder randseitig der Antriebswelle angeordnet sein.

Die Erfindung wird im Folgenden anhand einer lediglich ein Ausführungsbeispiel darstellenden Zeichnung erläutert. Es zeigen schematisch:

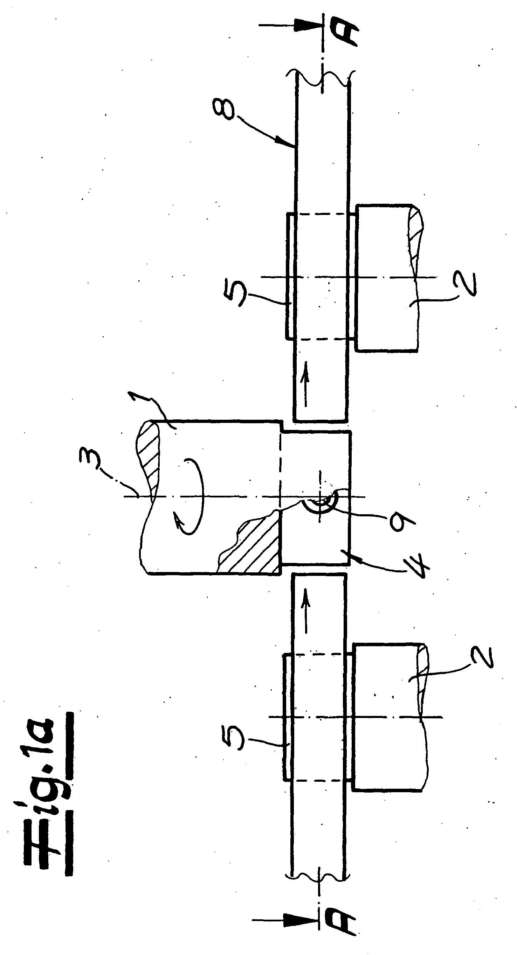

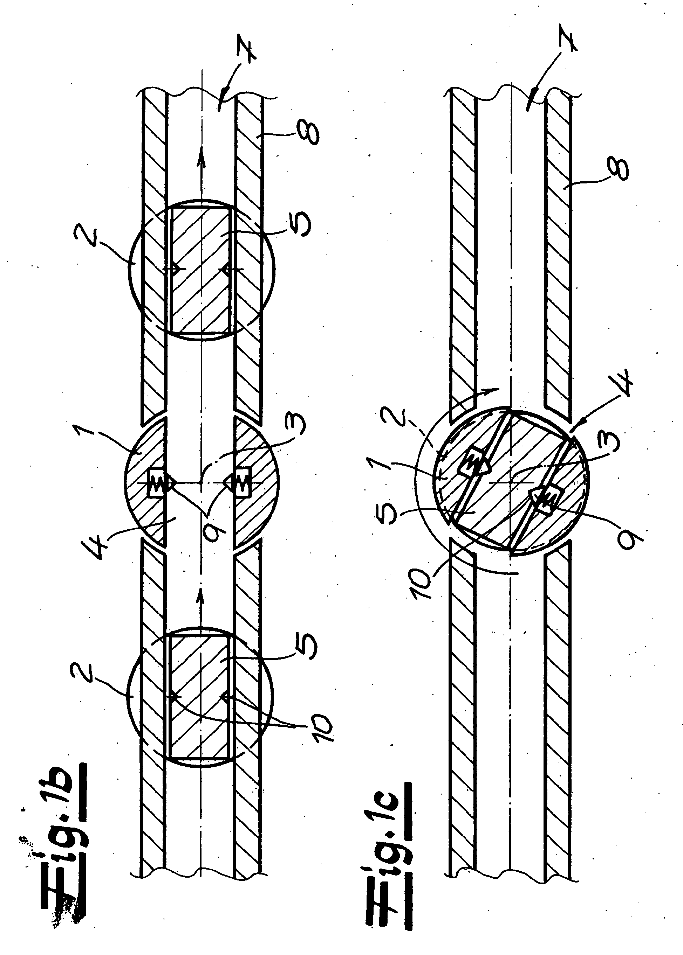

- Fig. 1 a: eine Antriebswelle und an die Antriebswelle kuppelbare Abtriebswellen einer Vorrichtung zur Finish-Bearbeitung von Werkstücken,
- Fig. 1 b: den Schnitt A-A aus Fig. 1a,
- Fig. 1 c: die Anordnung gemäß Fig. 1a im gekuppelten Zustand, ebenfalls im Schnitt A-A,
- Fig. 2: den Schnitt durch eine Antriebswelle und zwei Abtriebswellen einer als Rundtisch ausgebildeten Vorrichtung zur Finish-Bearbeitung von Werkstücken, in einer dem Schnitt A-A vergleichbaren Schnittebene,
- Fig. 3a und 3b: weitere Ausgestaltungen der Anordnung gemäß Fig.2.

Die Fig. 1a bis 1c zeigen eine Antriebswelle 1 und zwei an die Antriebswelle 1 kuppelbare Abtriebswellen 2, z. B. Spindeln, einer Vorrichtung zur Finish-Bearbeitung von Werkstücken. Die motorgetriebene Antriebswelle 1 ist um eine ortsfeste Längsachse 3 drehbar gelagert, wobei die Längsachsen der Antriebswelle 1 und der Abtriebswellen 2 vertikal verlaufen. Die Antriebswelle 1 weist einen Schlitz 4 auf und die Abtriebswellen 2 sind mit einem vorspringenden Endabschnitt 5 versehen, der in den Schlitz 4 seitlich einschiebbar ist. Der Schlitz 4 und der Endabschnitt 5 bilden zugeordnete Anschlussenden. Die Abtriebswellen 2 sind entlang einer Geraden senkrecht zu ihrer Längsachse positionierbar, wobei der als Steg ausgeführte Endabschnitt 5 in einer Ausnehmung 7 einer ortsfesten Führung 8 der Vorrichtung 3 verschiebbar angeordnet ist. Durch die Führung 8 sind die Abtriebswellen 2 außerhalb des Eingriffbereichs mit der Antriebswelle gegen ein Verdrehen gesichert und können ohne zu klemmen seitlich in den Schlitz 4 an dem Anschlussende der Antriebswelle 1 eingeschoben werden. Die Fig. 1 b zeigt den ausgekuppelten und die Fig. 1c den eingekuppelten Zustand. Wie in Fig. 1c dargestellt, stehen bei einer koaxialen Ausrichtung der Antriebswelle 1 und einer Abtriebswelle 2 der Schlitz 4 und der stegförmige Endabschnitt 5 in Eingriff und bilden eine Kupplung zur Übertragung von Drehbewegungen. Im eingekuppelten Zustand greifen federnde Elemente 9 der Antriebswelle 1, die in dem Schlitz 4 angeordnet sind, in zugeordnete vertikale Rastausnehmungen 10 des Stegs ein und sichern Antriebswelle 1 und Abtriebswelle 2 gegen Verrutschen.

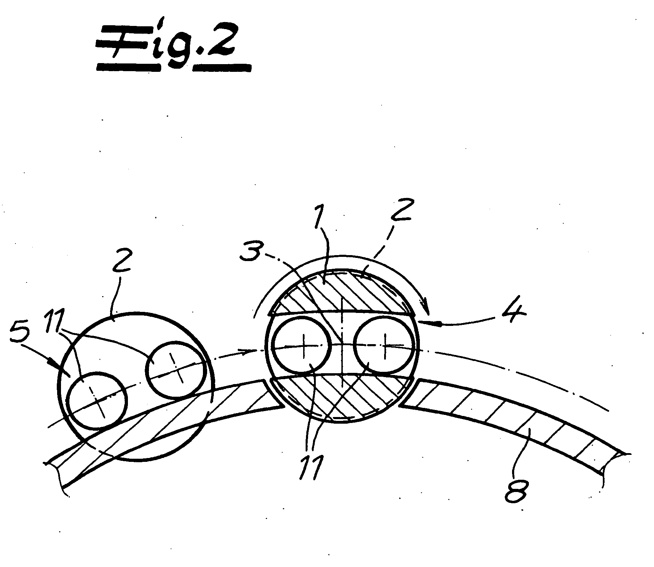

Fig. 2 zeigt eine Anordnung, bei der zwei Abtriebswellen 2 senkrecht zu ihren Längsachsen entlang eines Kreisbogens verschiebbar angeordnet sind, wobei der Endabschnitt 5 an den Anschlussenden der Abtriebswellen 2 durch zwei Rollen 11 gebildet ist. Die Rollen 11 liegen an einer kreisbogenförmig gekrümmten Führung 8 an. Der Schlitz 4 in dem Anschlussende der Antriebswelle 1 ist entsprechend dem Kreisbogen, entlang dem die Abtriebswellen 2 verschiebbar sind, gekrümmt.

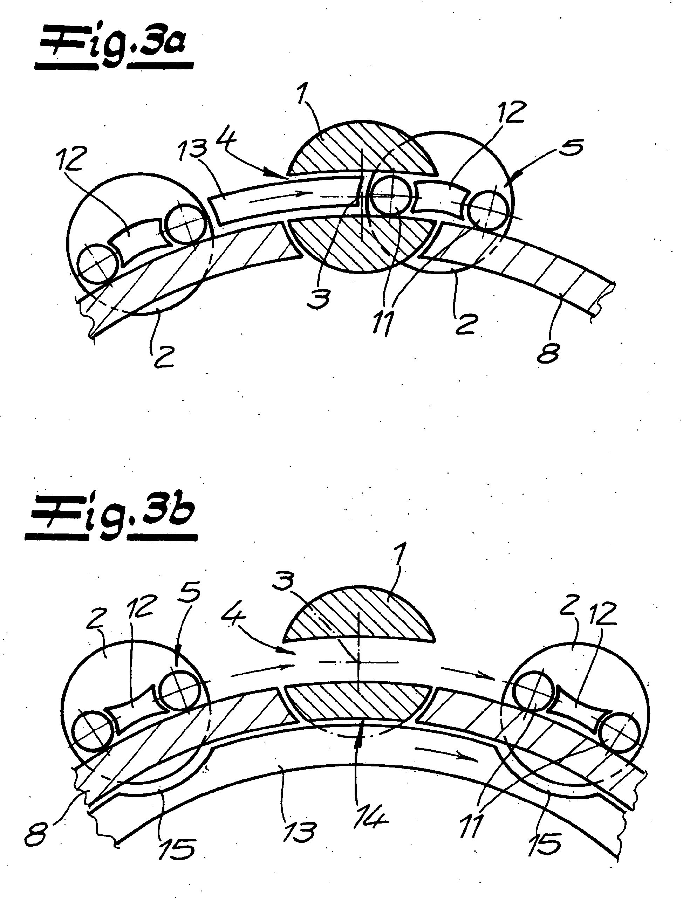

Fig. 3a zeigt eine Ausgestaltung, bei der die Endabschnitte der Abtriebswellen zwei Rollen 11 und einen zwischen den Rollen 11 angeordneten Zwischenabschnitt 12 aufweisen, der bei einem Einschieben der Endabschnitte 5 in den Schlitz 4 die dem Schlitz 4 zugeordnete Antriebswelle 1 gegen ein Verdrehen sichert. Des Weiteren weist die Vorrichtung zumindest ein Führungselement 13 auf, welches mit den Abtriebswellen 2 gemeinsam verschiebbar ist und welches die Antriebswelle 1 im ausgekuppelten Zustand gegen ein Verdrehen sichert. Die Endabschnitte 5 der Abtriebswellen 2 einerseits und das zwischen den Endabschnitten 5 angeordnete Führungselement 13 andererseits bilden Kreissegmente, die durch den Schlitz 4 in dem Anschlussende der Antriebswelle 1 geführt werden. Ein Verdrehen der Antriebswelle 1 ist nur möglich, wenn die Antriebswelle 1 koaxial mit einer der Abtriebswellen 2 angeordnet ist und die zugeordneten Anschlussenden in Eingriff stehen. Aufgrund der gebogenen Form des Zwischenabschnitts 12 können die Abtriebswellen 2 nur bei einem fest vorgegebenen Drehwinkel der Antriebswelle 1 nach vollen Drehungen eingekuppelt und ausgekuppelt werden.

Das mit den Abtriebswellen 2 gemeinsam verschiebbare Führungselement 13 kann die Antriebswelle 1 auch an ihrem Rand gegen ein Verdrehen sichern. Fig. 3b zeigt ein ringförmiges Führungselement 13, welches die Antriebswelle 1 im ausgekuppelten Zustand an einem abgeflachten Bereich 14 gegen ein Verdrehen sichert. Das Führungselement 13 ist mit den Abtriebswellen 2 verschiebbar und weist im Bereich der Abtriebswellen 2 eine Aussparung 15 auf. Im eingekuppelten Zustand der Antriebswelle 1 mit einer der Abtriebswellen 2 ermöglicht die zugeordnete Aussparung 15 des Führungselementes 13 eine freie Drehung der Antriebswelle 1. Der Zwischenabschnitt 12 an dem Anschlussende der Abtriebswellen 2 ist im Querschnitt konkav geformt, so dass im Gegensatz zu der Ausgestaltung gemäß Fig. 3a ein Ein- und Auskuppeln der Abtriebswelle 2 zusätzlich auch nach halben Drehungen der Antriebswelle 1 möglich ist.

## Patentansprüche

1. Vorrichtung zur Finish-Bearbeitung von Werkstücken, mit mindestens einer motorgetriebenen Antriebswelle (1), die um eine ortsfeste Längsachse drehbar gelagert ist, und mit zumindest einer an die Antriebswelle (1) kuppelbaren Abtriebswelle (2),
wobei die Abtriebswelle (2) ein Anschlussende aufweist, welches einem Anschlussende der Antriebswelle (1) zugeordnet ist,
wobei die Abtriebswelle (2) entlang einer als ortsfeste Führung ausgebildeten Bahn senkrecht zur Längsachse der Antriebswelle positionierbar angeordnet ist und
wobei bei einer Anordnung der Antriebswelle (1) und der Abtriebswelle (2), bei der die zugeordneten Anschlussenden in Eingriff stehen, die Anschlussenden eine Kupplung zur Übertragung von Drehbewegungen bilden,
**dadurch gekennzeichnet, daß** eines der Anschlussenden als Schlitz (4) und das zugeordnete Anschlussende als in den Schlitz (4) durch eine Bewegung der Abtriebswelle (2) entlang der vorgegebenen Bahn seitlich einschiebbarer Endabschnitt (5) ausgebildet ist.

2. Vorrichtung nach Anspruch 1, **dadurch gekennzeichnet, dass** die Längsachse der Antriebswelle und die Längsachse der Abtriebswelle parallel ausgerichtet sind, wobei bei einer koaxialen Anordnung der Antriebswelle mit der Abtriebswelle die zugeordneten Anschlussenden in Eingriff stehen.

3. Vorrichtung nach Anspruch 1 oder 2, **dadurch gekennzeichnet, dass** die Abtriebswelle (2) entlang einer geraden Linie verschiebbar angeordnet ist und dass der Schlitz (4) gerade verläuft.

4. Vorrichtung nach Anspruch 1 oder 2, **dadurch gekennzeichnet, dass** die Abtriebswelle (2) entlang eines Kreisbogens verschiebbar angeordnet ist und dass der Schlitz (4) entsprechend des Kreisbogens gekrümmt ist.

5. Vorrichtung nach einem der Ansprüche 1 bis 4, **dadurch gekennzeichnet, dass** der Schlitz (4) dem Anschlussende der Antriebswelle (1) zugeordnet ist.

6. Vorrichtung nach einem der Ansprüche 1 bis 5, **dadurch gekennzeichnet, dass** die Vorrichtung (3) zumindest ein Führungselement (13) aufweist, welches mit der Abtriebswelle (2) gemeinsam verschiebbar ist und die Antriebswelle (1) im ausgekuppelten Zustand gegen ein Verdrehen sichert.

7. Vorrichtung nach einem der Ansprüche 1 bis 6, **dadurch gekennzeichnet, dass** der Endabschnitt (5) als Steg ausgebildet ist, der entsprechend dem Schlitz (4) geformt und in diesen mit geringem Spiel einschiebbar ist.

8. Vorrichtung nach einem der Ansprüchen 1 bis 6, **dadurch gekennzeichnet, dass** der Endabschnitt (5) durch zumindest zwei Rollen (11) gebildet ist.

9. Vorrichtung nach einem der Ansprüche 1 bis 6, **dadurch gekennzeichnet, dass** der Endabschnitt (5) zwei Rollen (11) und einen zwischen den Rollen angeordneten Zwischenabschnitt (12) aufweist, der beim Einschieben des Endabschnittes (5) in den Schlitz (4) die dem Schlitz (4) zugeordnete Antriebswelle (1) oder Abtriebswelle (2) gegen ein Verdrehen sichert.

## Claims

1. Device for the finish-machining of workpieces, comprising at least one motor-driven drive shaft (1) which is mounted such that it can rotate about a stationary longitudinal axis, and comprising at least one driven shaft (2) which can be coupled to the drive shaft (1),
wherein the driven shaft (2) has a connection end which is associated with a connection end of the drive shaft (1),
wherein the driven shaft (2) is arranged such that it can be positioned along a path which is perpendicular to the longitudinal axis of the drive shaft, said path being designed as a stationary guide, and
wherein, when the drive shaft (1) and the driven shaft (2) are arranged such that the associated connection ends are in engagement, the connection ends form a coupling for the transmission of rotational movements,
**characterised in that** one of the connection ends is designed as a slot (4) and the associated connection end is designed as an end portion (5) which can be pushed into the slot (4) from the side by a movement of the driven shaft (2) along the predefined path.

2. Device according to claim 1, **characterised in that** the longitudinal axis of the drive shaft and the longitudinal axis of the driven shaft are oriented parallel to one another, wherein the associated connection ends are in engagement when the drive shaft and the driven shaft are arranged coaxially.

3. Device according to claim 1 or 2, **characterised in that** the driven shaft (2) is arranged such that it can be displaced along a straight line, and **in that** the slot (4) runs in a straight line.

4. Device according to claim 1 or 2, **characterised in that** the driven shaft (2) is arranged such that it can be displaced along a circular arc, and **in that** the slot (4) is curved in a manner corresponding to the circular arc.

5. Device according to one of claims 1 to 4, **characterised in that** the slot (4) is assigned to the connection end of the drive shaft (1).

6. Device according to one of claims 1 to 5, **characterised in that** the device (3) comprises at least one guide element (13) which can be displaced together with the driven shaft (2) and secures the drive shaft (1) against rotation in the disengaged state.

7. Device according to one of claims 1 to 6, **characterised in that** the end portion (5) is designed as a web which is shaped in a manner corresponding to the slot (4) and can be pushed into the latter with little play.

8. Device according to one of claims 1 to 6, **characterised in that** the end portion (5) is formed by at least two rollers (11).

9. Device according to one of claims 1 to 6, **characterised in that** the end portion (5) comprises two rollers (11) and an intermediate portion (12) which is arranged between the rollers and which, when the end portion (5) is pushed into the slot (4), secures the drive shaft (1) or driven shaft (2) associated with the slot (4) against rotation.

## Revendications

1. Dispositif destiné à l'usinage fini de pièces, comprenant au moins un arbre primaire (1) entraîné par moteur, qui est monté tournant autour d'un axe longitudinal stationnaire, et au moins un arbre de sortie (2) qui peut être accouplé à l'arbre primaire (1), dispositif dans lequel
l'arbre de sortie (2) présente une extrémité de raccordement, associée à une extrémité de raccordement de l'arbre primaire (1),
l'arbre de sortie (2) est disposé, avec une possibilité de positionnement perpendiculaire à l'axe longitudinal de l'arbre primaire, le long d'une trajectoire réalisée sous forme de guidage stationnaire, et
lors d'un agencement de l'arbre primaire (1) et de l'arbre de sortie (2), dans lequel les extrémités de raccordement associées sont en prise, les extrémités de raccordement forment un accouplement pour la transmission des mouvements de rotation,
**caractérisé en ce que**
l'une des extrémités de raccordement est configurée sous forme de fente (4) et l'extrémité de raccordement associée est configurée sous forme de section extrême (5), insérable latéralement dans la fente (4) par un déplacement de l'arbre de sortie (2) le long de la trajectoire prédéfinie.

2. Dispositif suivant la revendication 1, **caractérisé en ce que** l'axe longitudinal de l'arbre primaire et l'axe longitudinal de l'arbre de sortie ont une orientation parallèle, les extrémités de raccordement associées étant en prise lors d'un agencement coaxial de l'arbre primaire avec l'arbre de sortie.

3. Dispositif suivant la revendication 1 ou 2, **caractérisé en ce que** l'arbre de sortie (2) est déplaçable le long d'une ligne droite et que la fente (4) s'étend de façon rectiligne.

4. Dispositif suivant l'une des revendications 1 et 2, **caractérisé en ce que** l'arbre de sortie (2) est déplaçable le long d'un arc de cercle et que la fente (4) a un cintrage conforme à l'arc de cercle.

5. Dispositif suivant la revendication 1 ou 4, **caractérisé en ce que** la fente (4) est associée à l'extrémité de raccordement de l'arbre primaire (1).

6. Dispositif suivant l'une des revendications 1 à 5, **caractérisé en ce que** le dispositif (3) comporte au moins un élément de guidage (13), qui est déplaçable conjointement avec l'arbre de sortie (2) et bloque l'arbre primaire (1) contre une torsion dans l'état de désaccouplement.

7. Dispositif suivant l'une des revendications 1 à 6, **caractérisé en ce que** la section extrême (5) est configurée sous forme de traverse, qui est formée en conformité avec la fente (4) et peut être insérée dans cette dernière avec un faible jeu.

8. Dispositif suivant l'une des revendications 1 à 6, **caractérisé en ce que** la section extrême (5) est formée par au moins deux rouleaux (11).

9. Dispositif suivant l'une des revendications 1 à 6, **caractérisé en ce que** la section extrême (5) comporte deux rouleaux (11) et une section intermédiaire (12) disposée entre les rouleaux, laquelle section, lors de l'insertion de la section extrême (5) dans la fente (4), bloque contre une torsion l'arbre primaire (1) associé à la fente (4) ou l'arbre de sortie (2).
